# EUROPEAN PATENT SPECIFICATION

(11) **EP 3 646 983 B1**
(45) Date of publication and mention of the grant of the patent: **20.10.2021**
(21) Application number: 18822640.1
(22) Date of filing: 19.03.2018
(51) Int. Cl.: B23K 26/38, B23K 26/08, B23K 26/388

(54) **LASER MACHINING SYSTEM AND METHODS OF CONTROLLING LASER MACHINING SYSTEM**
LASERBEARBEITUNGSSYSTEM UND VERFAHREN ZUR STEUERUNG EINES LASERBEARBEITUNGSSYSTEMS
SYSTÈME D'USINAGE LASER ET PROCÉDÉS DE COMMANDE D'UN SYSTÈME D'USINAGE LASER

(30) Priority: 29.06.2017 JP 2017127128
(43) Date of publication of application: 06.05.2020
(73) Proprietor: Panasonic Intellectual Property Management Co., Ltd., Osaka-shi, Osaka 540-6207 (JP)
(72) Inventor: KOMATSU, Takamichi, Osaka-shi Osaka 540-6207 (JP)
(74) Representative: Vigand, Philippe
(86) International application number: PCT/JP2018/010681
(87) International publication number: WO 2019/003513

(56) References cited:
- WO-A1-2015/115604
- JP-A- H0 433 788
- JP-A- H0 999 384
- JP-A- H02 169 194
- JP-A- H05 104 270
- JP-A- H05 212 546
- JP-A- H06 278 060
- JP-A- H06 278 060
- JP-A- 2013 091 102
- JP-A- 2013 507 253
- US-A1- 2003 222 058

## Description

The present disclosure relates to methods of controlling a laser machining system and to a laser machining system.

### BACKGROUND ART

In recent years, laser machining techniques have been widely used in which energy of laser light is utilized for processing, such as cutting, on various kinds of target objects. This is because laser light has less thermal influence and scarcely causes deformation on target objects, and enables high-speed cutting of target objects.

In addition, laser machining apparatuses capable of three-dimensional machining have been achieved by mounting a laser cutting head on a vertical articulated robot with a higher degree of freedom. Such a vertical articulated robot can suitably cut a workpiece into a complicated shape, for example. However, in general, the vertical articulated robot is not required to have accuracy of machining equivalent to numerical control (NC) machining apparatuses. Thus, the vertical articulated robot cannot provide sufficient accuracy in machining on a simple plane.

PTL 1 discloses a method for controlling a path of a small-hole cutting unit to achieve high-quality cutting by enhancing the accuracy of a path of laser light for cutting and the accuracy of cutting. According to the method for controlling the path, a tip end of an arm of a robot includes a small-hole cutting unit configured to move a cutting torch in two-dimensional directions. The small-hole cutting unit accelerates the cutting torch along a predetermined path from a center of a desired small-hole cutting path as a starting point to a predetermined position of the small-hole cutting path. The small-hole cutting unit further moves the cutting torch to complete a circle from the predetermined position along the small-hole cutting path to cut a workpiece. A small-hole cutting unit then decelerates the cutting torch from the predetermined position to the starting position along a predetermined path located in an opposite direction to the circular path of the accelerated period. The small-hole cutting unit can arbitrarily set a clearance angle for entering a deceleration section from a workpiece cutting section.

The small-hole cutting unit disclosed in PTL 1 is equipped with a laser cutting head including an actuator with a plurality of degrees of freedom. In the case of simple machining, a desired cutting path can be achieved by operation of the laser cutting head alone without operation of a vertical articulated robot. More specifically, a laser cutting head with two degrees of freedom is mounted on the vertical articulated robot. Small-hole cutting is achieved only by operation of the laser cutting head.

### Citation List

### Patent Literature

PTL 1: Unexamined Japanese Patent Publication No. 6-278060 (basis for the preamble of claims 1, 2 and 3)

Further art is disclosed by the documents WO 2015/115604 and US 2003/222058.

### SUMMARY OF THE INVENTION

According to a method for controlling a path of a small-hole cutting unit disclosed in PTL 1, the cutting torch always moves from the center of a specific shape to a predetermined position of a small-hole cutting path. Thus, the method is useful for piercing of a specific shape, but is not applicable to cases where a specific shape is desired to be cut out.

The cutting torch starts accelerating from the center of a specific shape to reach a cutting path of the specific shape, and returns to the center of the small hole while decelerating after completing the cutting path. Depending on mechanisms or principles of operation of laser cutting heads, simple operation of acceleration or deceleration may cause discontinuities of speed at a shifting point from an acceleration section to a cutting path section and/or a shifting point from the cutting path section to a deceleration section. The laser cutting head may vibrate at these points exhibiting discontinuities of speed and may affect a cutting path.

An object of the present disclosure is to provide a laser machining system and methods of controlling a laser machining system that can be applied not only to piercing processing but also to cutting-out processing, and capable of suppressing variation in speed at a connection point between a starting point and a desired cutting path to perform an accurate cutting operation.

Methods of controlling a laser machining system and a laser machining system according to the present disclosure are defined in claims 1, 2 and 3.

The present disclosure can provide a laser machining system and a method for controlling the laser machining system that can be applied not only to piercing processing but also to cutting-out processing, and capable of suppressing variation in speed at a connection point between a starting point and a desired cutting path to perform an accurate cutting operation.

### BRIEF DESCRIPTION OF DRAWINGS

FIG. 1 is a configuration diagram schematically showing a laser cutting system according to an exemplary embodiment of the present disclosure.
FIG. 2 is a diagram illustrating a laser cutting head with two degrees of freedom of motion in a two-dimensional plane.
FIG. 3 is a diagram illustrating typical shapes drawn by the laser cutting head.
FIG. 4 is a diagram illustrating a screen for setting parameters displayed on a teaching device.
FIG. 5A is a diagram illustrating the parameters in piercing processing.
FIG. 5B is a diagram illustrating the parameters in the piercing processing.
FIG. 6A is a diagram illustrating the parameters in cutting-out processing.
FIG. 6B is a diagram illustrating the parameters in the cutting-out processing.
FIG. 7 is a flowchart showing a method of controlling a laser machining system.
FIG. 8A is a graph illustrating a position of a radial direction component in a starting step.
FIG. 8B is a graph illustrating a speed of the radial direction component in the starting step.
FIG. 9A is a graph illustrating a position of a rotational direction component in the starting step.
FIG. 9B is a graph illustrating a speed of the rotational direction component in the starting step.
FIG. 10A is a graph illustrating a position of the radial direction component in a cutting step.
FIG. 10B is a graph illustrating a speed of the radial direction component in the cutting step.
FIG. 11A is a graph illustrating a position of the rotational direction component in the cutting step.
FIG. 11B is a graph illustrating a speed of the rotational direction component in the cutting step.
FIG. 12A is a graph illustrating a position of the radial direction component in a finishing step.
FIG. 12B is a graph illustrating a speed of the radial direction component in the finishing step.
FIG. 13A is a graph illustrating a position of the rotational direction component in the finishing step.
FIG. 13B is a graph illustrating a speed of the rotational direction component in the finishing step.
FIG. 14 is a diagram illustrating a moving path of the laser cutting head.
FIG. 15A is a graph illustrating a position of the radial direction component from the starting step to the finishing step.
FIG. 15B is a graph illustrating a speed of the radial direction component from the starting step to the finishing step.
FIG. 16A is a graph illustrating a position of the rotational direction component from the starting step to the finishing step.
FIG. 16B is a graph illustrating a speed of the rotational direction component from the starting step to the finishing step.

### DESCRIPTION OF EMBODIMENT

An exemplary embodiment of a laser machining system and a method for controlling the laser machining system according to the present disclosure is described below with reference to the drawings.

### [Configuration of laser machining system]

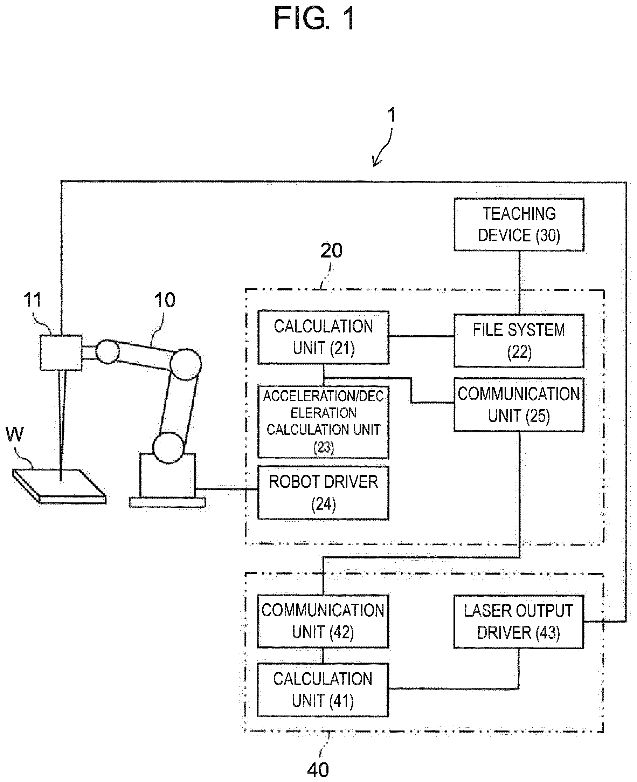

As shown in FIG. 1, a laser cutting system, which is an example of a laser machining system, includes one robot system 1 equipped with laser cutting head 11, and one laser oscillation device 40.

Robot system 1 includes manipulator 10, robot control device 20, and teaching device 30. Manipulator 10 is equipped with laser cutting head 11.

Robot control device 20 is configured to control operation of manipulator 10 and laser cutting head 11, and causes laser cutting head 11 to emit laser light. This enables desired machining on a target object, i.e., workpiece W.

Robot control device 20 includes calculation unit 21, file system 22, acceleration/deceleration calculation unit 23, robot driver 24, and communication unit 25. Robot control device 20 serves as a controller to perform a starting step, a cutting step, and a finishing step as described below.

File system 22 includes a storage unit that stores a teaching file downloaded from teaching device 30. The teaching file is formed as an operator operates teaching device 30. Calculation unit 21 is configured to calculate moving paths of manipulator 10 and laser cutting head 11 based on the teaching file stored in the storage unit, and process communication data received by communication unit 25.

Acceleration/deceleration calculation unit 23 is configured to calculate optimal acceleration/deceleration speed with respect to the moving paths calculated by calculation unit 21. Robot driver 24 is configured to drive motors mounted on manipulator 10 and laser cutting head 11 to cause manipulator 10 and laser cutting head 11 to have a predetermined angle or a predetermined speed with respect to the moving path of each axis calculated by acceleration/deceleration calculation unit 23. Communication unit 25 is a communication interface for laser oscillation device 40 and is configured to transmit signals for controlling turning on and off of laser light emitted from laser oscillation device 40 and controlling power output of activated laser light, etc., and receive response signals in response to the controlling signals to and from laser oscillation device 40.

Laser oscillation device 40 includes calculation unit 41, communication unit 42, and laser output driver 43. Calculation unit 41 is configured to control turning on and off and control power output of laser light based on communication data received by communication unit 42. Communication unit 42 is a communication interface for robot control device 20. Laser output driver 43 is configured to drive and control a laser in accordance with a command from calculation unit 41. Laser light emitted from laser oscillation device 40 is transmitted to laser cutting head 11 through an optical fiber.

### [Configuration of laser cutting head]

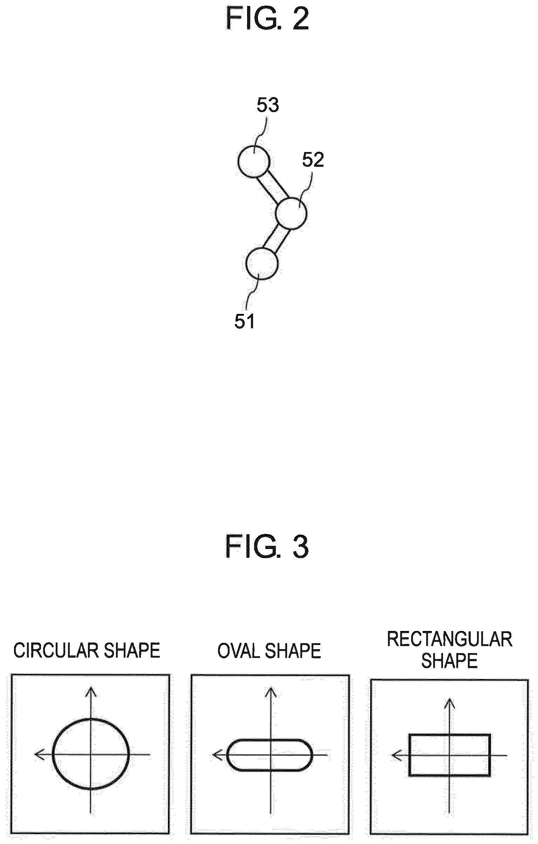

FIG. 2 schematically shows a mechanism of laser cutting head 11. Laser cutting head 11 includes two motion axes 51, 52 that are parallel to each other and by which an arm of laser cutting head 11 is jointed together. Operation of these two motion axes 51, 52 allows movement of laser cutting head 11 with two degrees of freedom in a two-dimensional plane. Motion axis 51 also serves as a motion shaft of manipulator 10. A tip end of the arm of laser cutting head 11 includes emission device 53 configured to emit laser light transmitted from laser oscillation device 40 through an optical fiber toward workpiece W.

Operation of other motion shafts of manipulator 10 allows three-dimensional movement of laser cutting head 11. In other words, laser cutting head 11 has a plurality of degrees of freedom of motion at least in a two-dimensional plane.

Laser cutting head 11 can move emission device 53 along a desired path by rotating the arm around two motion axes 51, 52. Accordingly, an operation range and the degree of freedom of laser cutting head 11 are less than those of manipulator 10. However, emission device 53 can be moved along a desired path by simply operating laser cutting head 11 in a scene of planar cutting of small circles, which is frequently required for laser cutting processing. This achieves high-speed and high-accurate operation as compared with cutting with manipulator 10.

FIG. 3 shows typical patterns to be drawn by laser cutting head 11. FIG. 3 shows a circular shape (a small circle) in the left part thereof, an oval shape in the middle part thereof, and a rectangular shape in the right part thereof, but these shapes should not be construed as limitation of the present disclosure.

### [Method for setting parameters via teaching device]

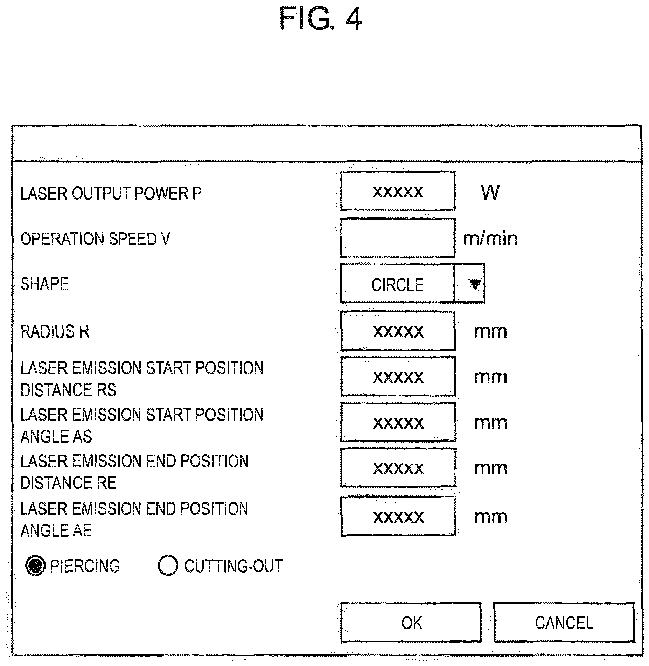

FIG. 4 exemplifies a screen for setting parameters in teaching of a cutting shape by using teaching device 30. In a cutting operation of a circular shape, for example, an operator sets output power P of laser light, operation speed V of emission device 53 mounted on laser cutting head 11 (corresponding to a laser spot operation speed), and radius R of the circular shape in accordance with an operation screen displayed on a display unit of teaching device 30. These parameters are extremely important for defining the shape of workpiece W obtained by the cutting operation.

In addition to the above parameters, the operator sets distance RS and angle AS indicating an operation start point with reference to a base point, i.e., a position to start emission of laser light, distance RE and angle AE indicating an operation end point with reference to the base point, i.e., a position to stop the emission of laser light, and a type of laser machining, i.e., whether the laser cutting of a path is piercing processing or cutting-out processing.

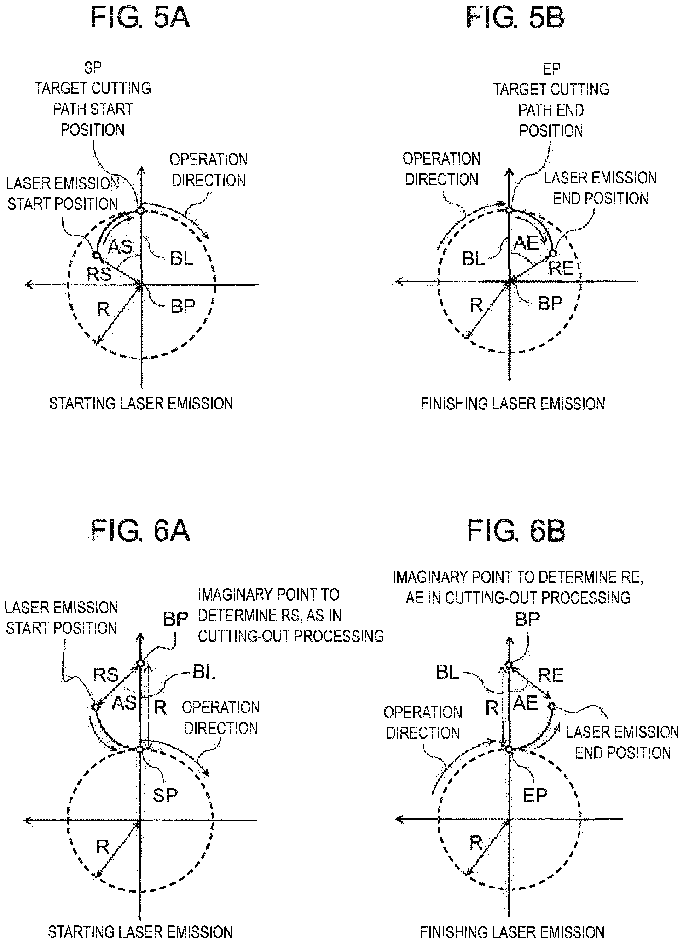

These parameters are described in detail with reference to FIGS. 5A, 5B, 6A and 6B.

Laser emission start position (RS, AS) and laser emission end position (RE, AE) are located in a cutting margin where additional cutting has no effect on a desired target cutting path.

A moving speed of a laser spot and power of laser may be unstable immediately after a laser is activated. Such unstableness may affect a target portion if a cutting operation is started by abruptly emitting laser light along a desired cutting shape immediately after activation of a laser. In view of this, a cutting margin is provided to ensure a time period for a laser to become stabilized. For this reason, laser emission start position (RS, AS) serves as an operation start point.

The cutting shape may become uncertain if a laser is controlled to stop and a movement of the laser spot is stopped immediately after the cutting operation along the desired cutting shape is finished. In view of this, a cutting margin is provided to lead a spot of laser light away from the cutting shape after the cutting operation along the desired cutting shape is finished. For this reason, laser emission end position (RE, AE) serves as an operation end point.

The above described laser cutting system is used for piercing processing and cutting-out processing. In piercing processing for removing an unnecessary portion from a flat plate as workpiece W, for example, an additional cut can be made inside a desired cutting shape (shown by the broken line in the figure) as shown in FIG. 5A. Thus, laser emission start position (RS, AS) is determined to be inside a region surrounded by a target cutting path defining a desired cutting shape. In the same manner, laser emission end position (RE, AE) is determined to be inside the region surrounded by the target cutting path defining the desired cutting shape, as shown in FIG. 5B.

In cutting-out processing for extracting a necessary portion from a flat plate as workpiece W, for example, an additional cut can be made outside a desired cutting shape (shown by the broken line in the figure) as shown in FIG. 6A. Thus, laser emission start position (RS, AS) is determined to be outside a region surrounded by a target cutting path defining a desired cutting shape. In the same manner, laser emission end position (RE, AE) is determined to be outside the region surrounded by the target cutting path defining the desired cutting shape, as shown in FIG. 6B.

Laser emission start position (RS, AS) and laser emission end position (RE, AE) are determined, according to the present invention, with reference to base point BP on a two-dimensional coordinate plane that defines a desired cutting shape, and are selectively determined to be inside or outside the cutting shape. Specifically, the laser emission start position and the laser emission end position are individually determined by distance RS, RE from base point BP and angle AS, AE with respect to base line BL that passes base point BP. Base line BL is a line segment connecting target-path-cutting start point SP and base point BP. Target-path-cutting start point SP is located on a target cutting path.

In an example shown in FIG. 5A, base point BP is located at center coordinates of a circle with radius R indicating a target cutting path. Angle AS is determined with reference to a line segment connecting target-path-cutting start point SP and base point BP, and distance RS is determined in a direction toward angle AS from base point BP.

In an example shown in FIG. 5B, base point BP is located at center coordinates of a circle with radius R indicating a target cutting path. Angle AE is determined with reference to a line segment connecting target-path-cutting end point EP and base point BP, and distance RE is determined in a direction toward angle AE from base point BP. Target-path-cutting end point EP is located on the target cutting path. In these examples, target-path-cutting start point SP and target-path-cutting end point EP are set at the same position on the target cutting path, but may be set at different positions.

In an example shown in FIG. 6A, base point BP is located on a line connecting center coordinates of a circle with radius R indicating a target cutting path and target-path-cutting start point SP and at distance 2R from the center coordinates. Angle AS is determined with reference to a line segment connecting target-path-cutting start point SP and base point BP, and distance RS is determined in a direction toward angle AS from base point BP.

In an example shown in FIG. 6B, base point BP is located on a line connecting center coordinates of a circle with radius R indicating a target cutting path and target-path-cutting end point EP and at distance 2R from the center coordinates. Angle AE is determined with reference to a line segment connecting target-path-cutting end point EP and base point BP, and distance RE is determined in a direction toward angle AE from base point BP. In these examples, target-path-cutting start point SP and target-path-cutting end point EP are set at the same position on the target cutting path, but may be set at different positions.

FIGS. 5A, 5B, 6A, and 6B each show a case where a desired cutting shape is a perfect circle. Similarly, in the case where a desired cutting shape is an oval shape or a rectangular shape, laser emission start position (RS, AS) and laser emission end position (RE, AE) are determined in advance with reference to arbitrary base point BP on a two-dimensional coordinate plane that defines a desired cutting shape. Numerical values of RS, AS, RE and AE are input through the screen for setting the parameters of teaching device 30 shown in FIG. 4.

A moving path from laser emission start position (RS, AS) to target-path-cutting start point SP is set in an arc shape that is in contact with the cutting shape at target-path-cutting start point SP. A moving path from target-path-cutting end point EP to laser emission end position (RE, AE) is set in an arc shape that is in contact with the cutting shape at target-path-cutting end point EP.

### [Cutting process by laser machining system]

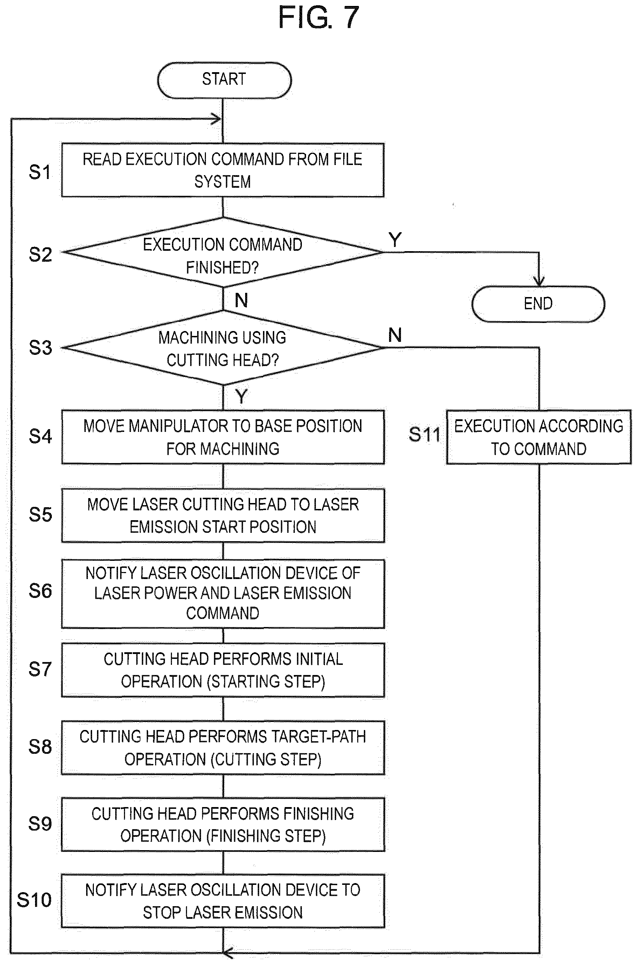

FIG. 7 shows a cutting process in the case where a circular shape is cut off in piercing processing.

A teaching program set in advance by an operator through teaching device 30 has been taken into file system 22 of robot control device 20. The teaching program taken into file system 22 is read by calculation unit 21 (S1), and operation control of manipulator 10, control of laser oscillation device 40, and the like are sequentially executed based on an execution command incorporated in the teaching program (S2).

In the case where the teaching program that has been read out in step S1 indicates cut-off processing using laser cutting head 11 (Y in S3), processing is executed from step S4 to step S10, and in the case where the teaching program indicates other processing (N in S3), processing is executed in accordance with a command of the read teaching program (S11).

In step S4, manipulator 10 is controlled by robot driver 24 to move to a preset base position (the position denoted by reference mark BP in FIGS. 5A, 5B, 6A and 6B) (S4). Then, laser cutting head 11 is controlled to move to laser emission start position (RS, AS) in accordance with coordinate information defined by the teaching program (S5).

Laser oscillation device 40 is then notified through communication units 25, 42 of laser emission command to emit laser light of power P that has been set in the teaching program by calculation unit 21 (S6). Receiving the notification, laser oscillation device 40 controls laser output driver 43 and turns on the laser based on the laser emission command received through communication units 25, 42, and drives and controls the laser to emit laser light of power P as instructed by the command (S6).

When laser light is emitted from laser oscillation device 40, an initial-movement operation is started by operating laser cutting head 11 to move the laser light along an arc-shaped path from laser emission start position (RS, AS) to target-path-cutting start point SP of the target cutting path (S7). After completion of the initial-movement operation, a target-path-movement operation is continuously performed in which the laser light is moved along a target cutting path corresponding to a desired cutting shape from target-path-cutting start point SP to target-path-cutting end point EP (S8).

When the movement of the laser light from target-path-cutting start point SP to target-path-cutting end point EP is finished through the target-path-movement operation, a finishing-movement operation is performed in which the laser light is moved along an arc-shaped path from target-path-cutting end point EP to laser emission end position (RE, AE) (S9). After completion of the finishing-movement operation, calculation unit 21 notifies laser oscillation device 40 of a laser-stop command to stop laser light (S10).

### [Initial-movement operation]

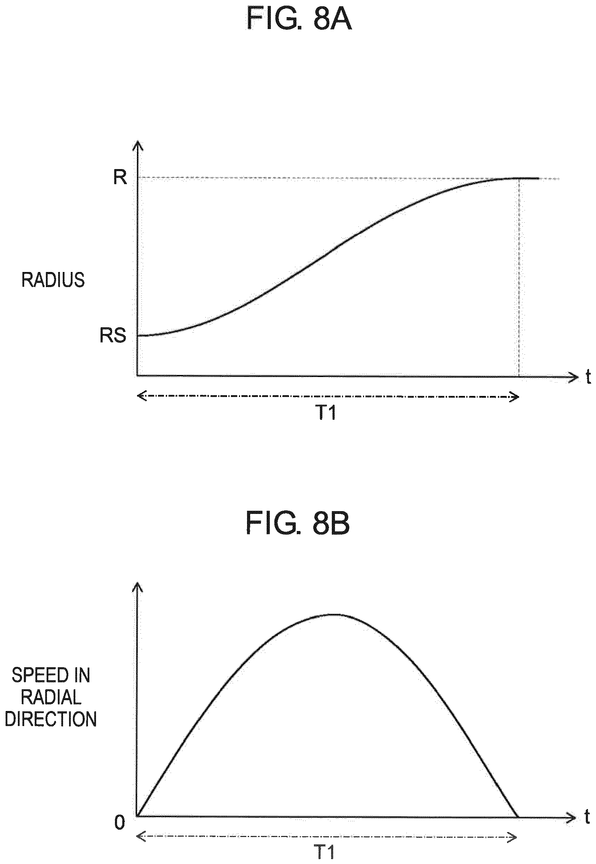

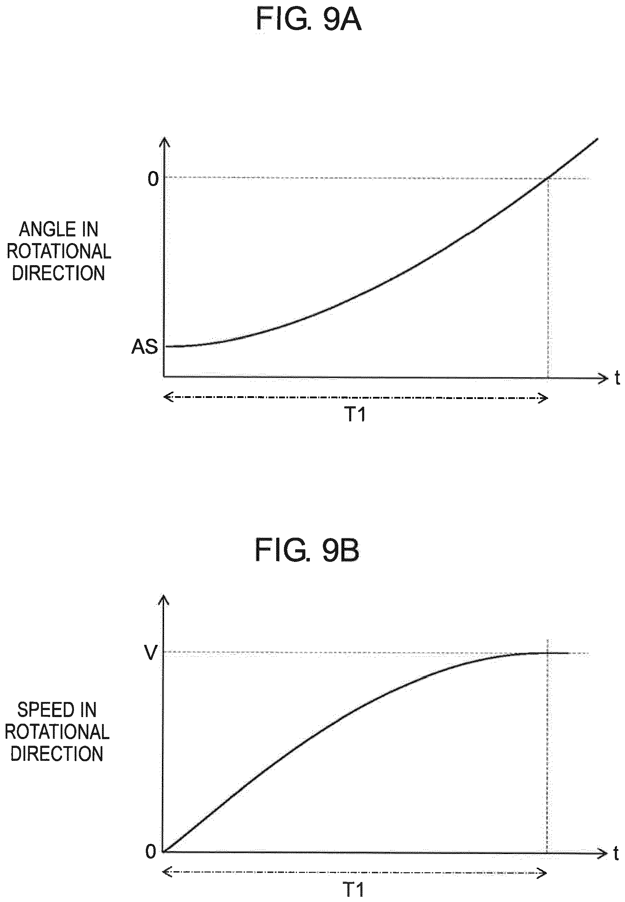

FIGS. 8A, 8B, 9A and 9B each show characteristics of the above-described initial-movement operation, i.e., the starting step. FIGS. 8A and 8B respectively show a position and a speed of a radial direction component of the arc-shaped path from laser emission start position (RS, AS) to target-path-cutting start point SP of the target cutting path. FIGS. 9A and 9B respectively show a position and a speed of a rotational direction component of the arc-shaped path from laser emission start position (RS, AS) to target-path-cutting start point SP of the target cutting path. In these figures, reference mark T1 refers to an initial-movement time in which the laser light moves from laser emission start position (RS, AS) to target-path-cutting start point SP. The radial direction component corresponds to a distance from a given position to base point BP. The rotational direction component corresponds to an angle formed by a line segment connecting base point BP and target-path-cutting start point SP and a line segment connecting base point BP and the given position.

Since laser cutting head 11 that has been initially in a non-active state starts to move from laser emission start position (RS, AS), the initial speed of the radial direction component and the rotational direction component are both zero, as shown in FIGS. 8B and 9B. As shown in FIG. 8B, the speed of the radial direction component increases as a distance from laser emission start position (RS, AS) increases, then, decreases as a distance from target-path-cutting start point SP decreases, and becomes zero again when initial-movement time T1 has elapsed. As shown in FIG. 8A, a distance between base point BP and laser light that has been initially RS changes to radius R of a circle when initial-movement time T1 has elapsed.

As shown in FIG. 9B, the speed of the rotational direction component is increased, as a distance from laser emission start position (RS, AS) increases, and reaches speed V for the target-path-movement operation when initial-movement time T1 has elapsed. As shown in FIG. 9A, the rotational direction angle is controlled to become zero when initial-movement time T1 has elapsed.

### [Target-path-movement operation]

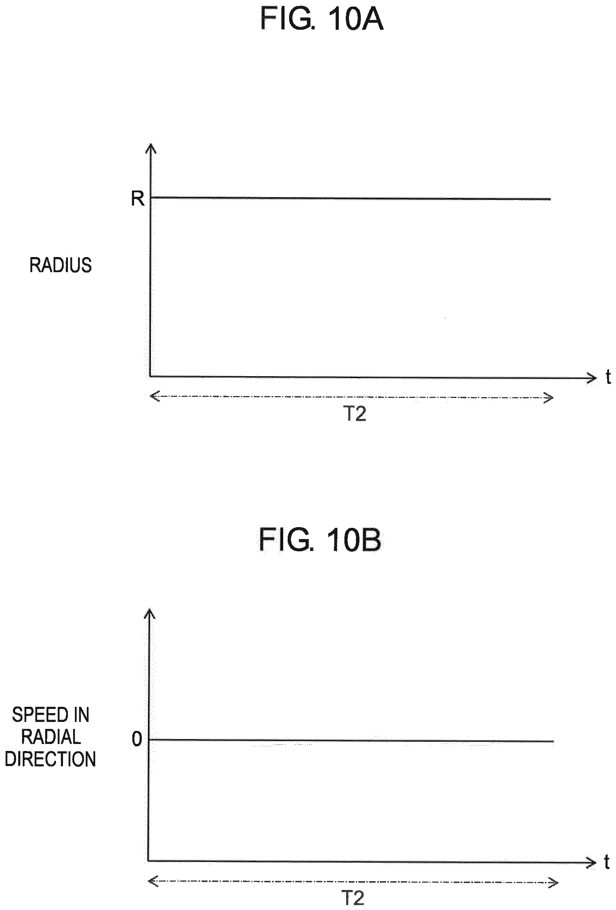

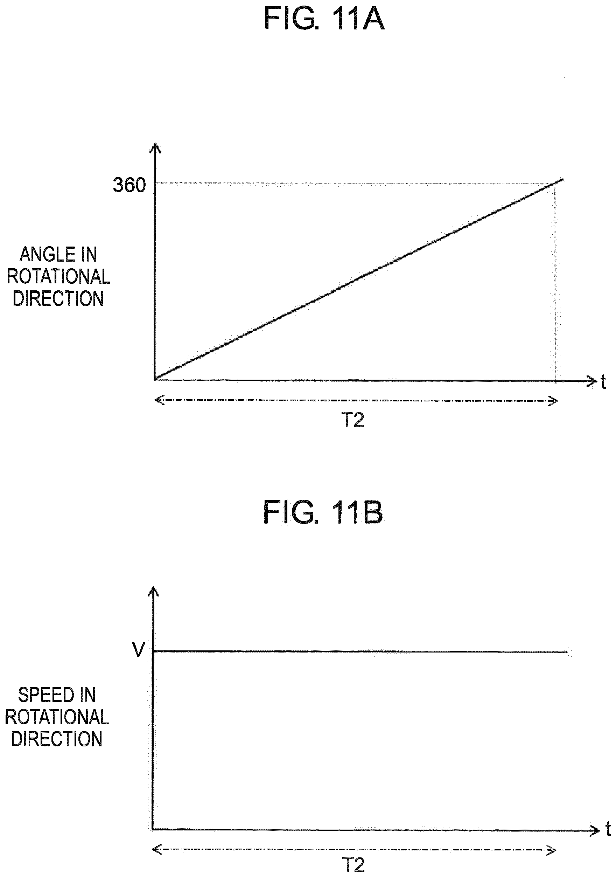

FIGS. 10A, 10B, 11A and 11B each show characteristics of the above described target-path-movement operation, i.e., the cutting step. Reference mark T2 refers to a time period in which the laser light moves along the target cutting path from target-path-cutting start point SP to target-path-cutting end point EP. As shown in FIGS. 10A and 10B, the laser light is controlled to move while maintaining the radial direction speed of zero and also maintaining distance R from the center of the circle in the cutting step. As shown in FIGS. 11A and 11B, the laser light is controlled to move along a circle with radius R while maintaining a constant speed V from an angle of 0° to an angle of 360° measured in the radial direction during the cutting step.

### [Finishing-movement operation]

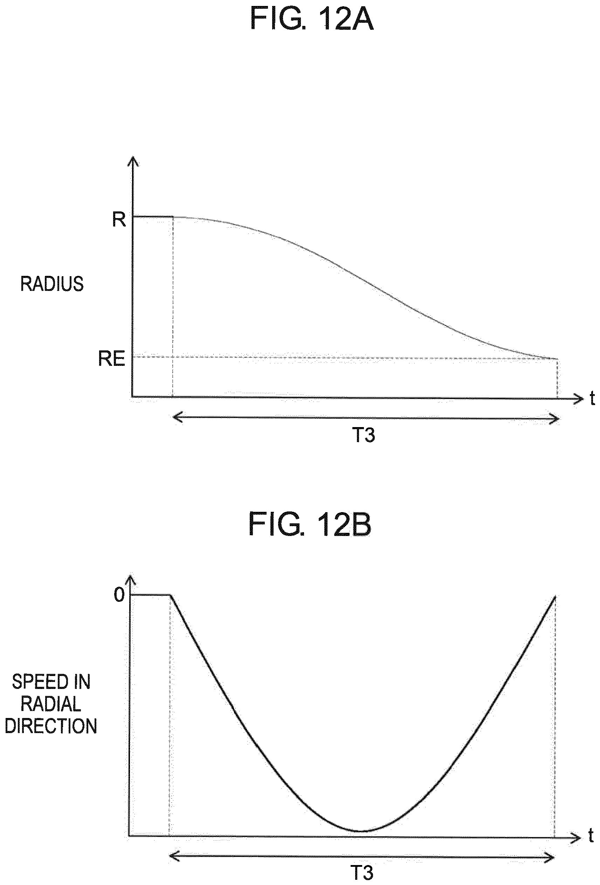

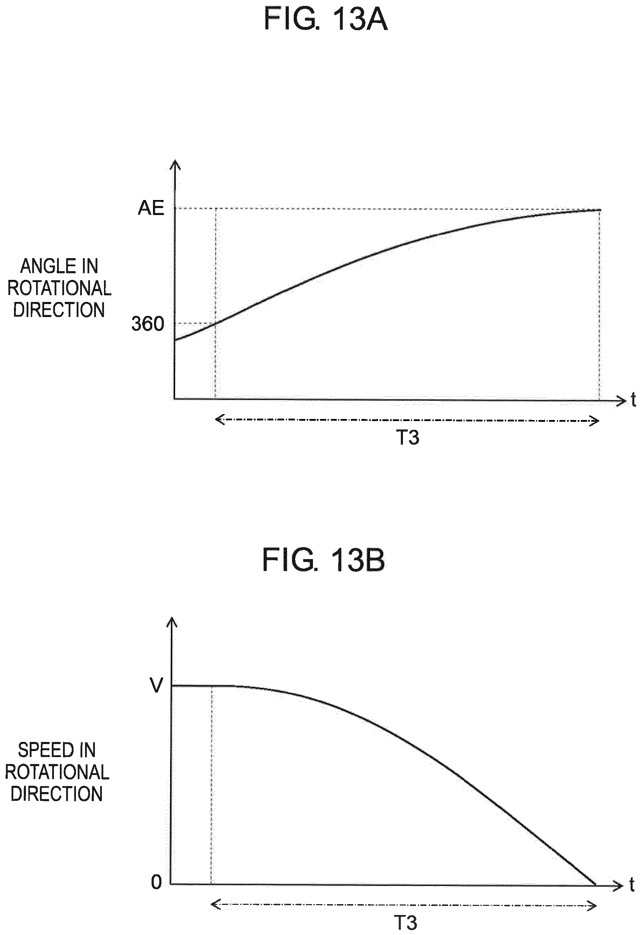

FIGS. 12A, 12B, 13A and 13B each show characteristics of the above-described finishing-movement operation, i.e., the finishing step. FIGS. 12A and 12B respectively show a position and a speed of the radial direction component of the arc-shaped path from target-path-cutting end point EP of the target cutting path of the laser light to laser emission end position (RE, AE). FIGS. 13A and FIG. 13B respectively show a position and a speed of the rotational direction component of the arc-shaped path from target-path-cutting end point EP of the target cutting path of the laser light to laser emission end position (RE, AE). Reference mark T3 refers to a finishing-movement time in which the laser light moves from target-path-cutting end point EP to laser emission end position (RE, AE). The rotational direction component corresponds to an angle formed by a line segment connecting base point BP and target-path-cutting end point EP and a line segment connecting base point BP and a given position.

When the laser light emitted from laser cutting head 11 moves along the target cutting path at speed V and reaches target-path-cutting end point EP, laser light then moves toward laser emission end position (RE, AE) along the arc-shaped path in which the speed of the radial direction component is 0, and the speed of the rotational direction component is V. As shown in FIG. 12B, the speed of the radial direction component decreases (accelerates in the negative direction) as a distance from target-path-cutting end point EP increases, then, increases (decelerates in the negative direction) as a distance from laser emission end position (RE, AE) decreases, and becomes zero again when finishing-movement time T3 has elapsed. As shown in FIG. 12A, a distance between base point BP and laser light, which has been R when the target-path operation has finished, changes to RE when the finishing-movement operation has completed.

As shown in FIG. 13B, the speed of rotational direction component decreases as a distance from target-path-cutting end point EP increases, and becomes zero, i.e., the movement stops when finishing-movement time T3 has elapsed. As shown in FIG. 13A, the angle in the rotational direction is controlled to become laser emission end angle AE when finishing-movement time T3 has elapsed.

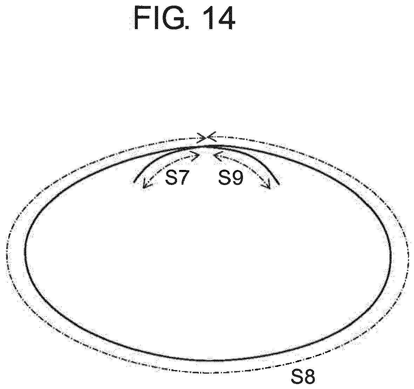

In other words, the method for controlling the laser machining system includes the starting step (reference mark S7 in FIGS. 7 and 14), the cutting step (reference mark S8 in FIGS. 7 and 14), and the finishing step (reference mark S9 in FIGS. 7 and 14). In the starting step, the laser cutting head is moved along the arc-shaped path to cause laser light irradiation to move from the operation start point, which is defined with reference to the base point of coordinates that defines the cutting shape, to the target-path-cutting start point located along the cutting shape. In the cutting step, the laser cutting head is moved to cause laser light irradiation to move from the target-path-cutting start point to the target-path-cutting end point located along the cutting shape. In the finishing step, the laser cutting head is moved along an arc-shaped path to cause laser light irradiation to move from the target-path operation end point to the operation end point defined with reference to the base point.

In the starting step of the method according to a first aspect of the present invention (i.e. claim 1), the laser light is accelerated and then decelerated in a direction along a line segment connecting the base point and the target-path-cutting start point, and accelerated in a direction toward the line segment connecting the base point and the target-path-cutting start point. In the finishing step of the method according to a second aspect of the present invention (i.e. claim 2), the laser light is accelerated and then decelerated in a direction along a line segment connecting the target-path-cutting end point and the base point, and decelerated in a direction toward the line segment connecting the target-path-cutting end point and the base point.

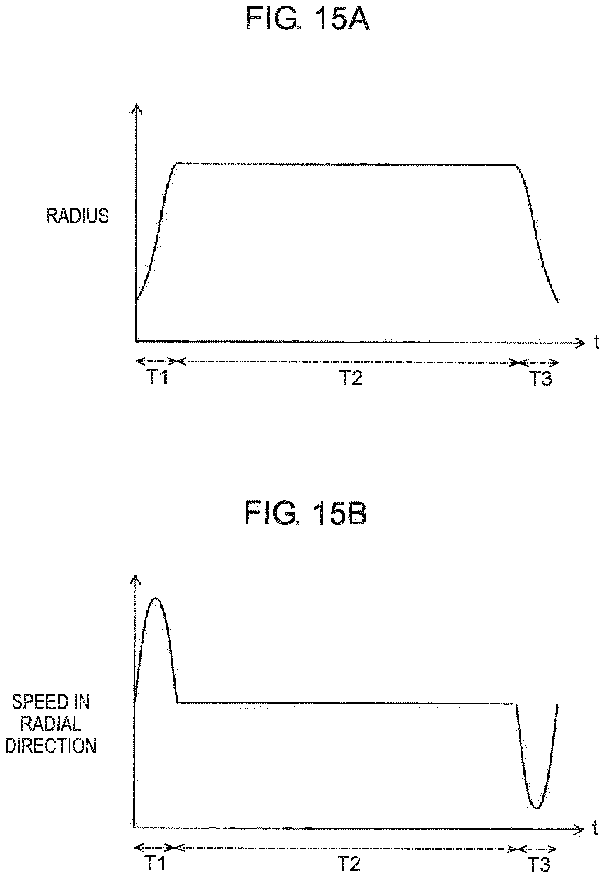

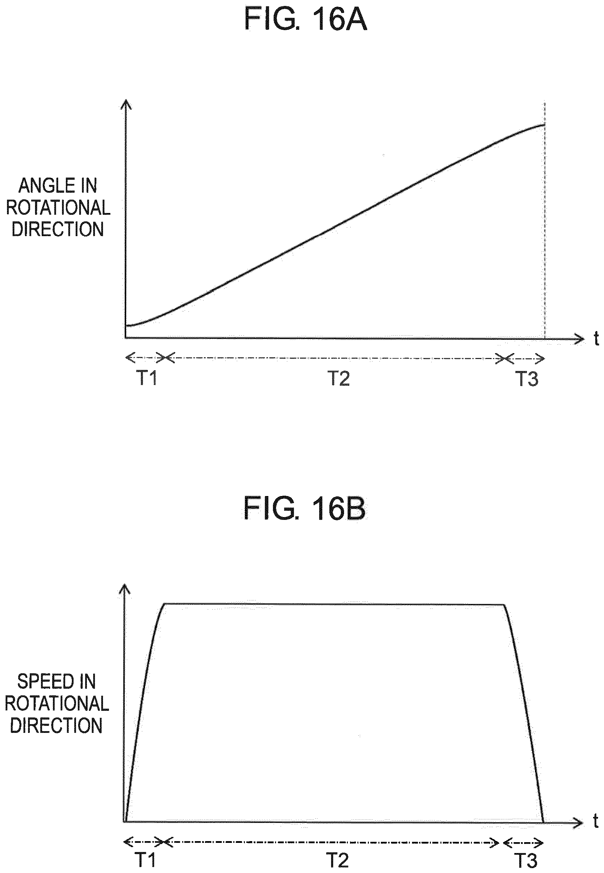

FIG. 15A is a characteristic diagram integrating FIGS. 8A, 10A, and 12A. FIG. 15B is a characteristic diagram integrating FIGS. 8B, 10B, and 12B. FIG. 16A is a characteristic diagram integrating FIGS. 9A, 11A, and 13A. FIG. 16B is a characteristic diagram integrating FIGS. 9B, 11B, and 13B.

Since the present exemplary embodiment includes the starting step and the finishing step as described above, the present exemplary embodiment achieves a highly accurate operation without exhibiting a sudden change in speed.

In general, actuators including motion axis 51 and motion shaft 52 of laser cutting head 11 are likely to vibrate as the machinery cannot bear the change in speed, when subjected to a sudden movement. Such vibration of the machinery obviously affects a path of the laser cutting.

Thus, laser cutting head 11 needs to be moved while being accelerated or decelerated respectively in the starting step in which the operation starts or in the finishing step in which the operation ends. In normal operation, motion axis 51 and motion axis 52 are accelerated independently in most cases. However, a path of laser cutting head 11 is defined by movements of the two motion shafts, i.e., motion axis 51 and motion axis 52, and thus, if each of the axes 51, 52 is accelerated independently, a target cutting path would be disrupted. In view of this, motion axis 51 and motion axis 52 are accelerated based on a path of laser cutting head 11, i.e., a corresponding path of laser light.

In addition, a period from the starting step to the cutting step and a period from cutting step to the finishing step have different target speeds in the radial direction and in the rotational direction. Thus, a simple operation from the laser emission start position to a target-path operation start position and from a target-path operation end position to the laser emission end position causes an abrupt change in the speed in the radial direction when the laser light reaches the target-path operation start position, which may disrupt the target cutting path immediately after the target-path operation starts. In view of the above, the operation method is configured to avoid such an abrupt change in speed in each of the radial direction component and the angle direction component.

### INDUSTRIAL APPLICABILITY

The present disclosure achieves a laser machining system capable of producing a cutting path with higher accuracy in a cutting operation using a laser cutting head, and is highly useful in industry.

### REFERENCE MARKS IN THE DRAWINGS

- 1:: robot system
- 10:: manipulator
- 11:: laser cutting head
- 20:: robot control device
- 21:: calculation unit
- 22:: file system
- 23:: acceleration/deceleration calculation unit
- 24:: robot driver
- 25:: communication unit
- 30:: teaching device
- 40:: laser oscillation device
- 41:: calculation unit
- 42:: communication unit
- 43:: laser output driver
- 51:: motion axis
- 52:: motion axis
- 53:: emission device

## Claims

1. A method of controlling a laser machining system (1), the laser machining system including:
a robot with a laser cutting head (11) having a plurality of degrees of freedom of motion at least in a two-dimensional plane; and
a laser oscillation device (40) configured to transmit laser light to the laser cutting head (11),
the laser machining system being configured to cut a target object into a desired cutting shape by moving the laser cutting head (11), the method comprising:
a starting step of moving the laser cutting head (11) along an arc-shaped path to cause laser light irradiation to move from an operation start point (RS, AS) to a target-path-cutting start point (SP), the operation start point (RS, AS) being determined with reference to a base point (BP) on a coordinate plane that defines the cutting shape, the target-path-cutting start point (SP) being located along the cutting shape;
a cutting step of moving the laser cutting head (11) to cause laser light irradiation to move from the target-path-cutting start point (SP) to a target-path-cutting end point (EP) located along the cutting shape; and
a finishing step of moving the laser cutting head (11) along an arc-shaped path to cause laser light irradiation to move from the target-path operation end point (EP) to an operation end point (RE, AE) determined with reference to the base point (BP);
**characterized in that** the operation start point (RS, AS) and the operation end point (RE, AE) are determined individually based on a distance from the base point (BP) and an angle from a base line (BL) connecting the target-path-cutting start point (SP) and the base point (BP), and selectively determined to be inside or outside the cutting shape; and
in the starting step, the laser cutting head (11) is accelerated and then decelerated in a direction along a line segment (BL) connecting the base point (BP) and the target-path-cutting start point (SP), and is accelerated in a direction toward the line segment (BL) connecting the base point (BP) and the target-path-cutting start point (SP).

2. A method of controlling a laser machining system (1), the laser machining system including:
a robot with a laser cutting head (11) having a plurality of degrees of freedom of motion at least in a two-dimensional plane; and
a laser oscillation device (40) configured to transmit laser light to the laser cutting head (11),
the laser machining system (1) being configured to cut a target object into a desired cutting shape by moving the laser cutting head (11), the method comprising:
a starting step of moving the laser cutting head (11) along an arc-shaped path to cause laser light irradiation to move from an operation start point (RS, AS) to a target-path-cutting start point (SP), the operation start point (RS, AS) being determined with reference to a base point (BP) on a coordinate plane that defines the cutting shape, the target-path-cutting start point (SP) being located along the cutting shape;
a cutting step of moving the laser cutting head (11) to cause laser light irradiation to move from the target-path-cutting start point (SP) to a target-path-cutting end point (EP) located along the cutting shape; and
a finishing step of moving the laser cutting head (11) along an arc-shaped path to cause laser light irradiation to move from the target-path operation end point (EP) o an operation end point (RE, AE) determined with reference to the base point (BP);
**characterized in that** the operation start point (RS, AS) and the operation end point (RE, AE) are determined individually based on a distance from the base point (BP) and an angle from a base line(BL) connecting the target-path-cutting start point (SP) and the base point (BP), and selectively determined to be inside or outside the cutting shape; and
in the finishing step, the laser cutting head (11) is accelerated and then decelerated in a direction along a line segment (BL) connecting the target-path-cutting end point (EP) and the base point (BP), and is decelerated in a direction toward the line segment (BL) connecting the target-path-cutting end point (EP) and the base point (BP).

3. A laser machining system (1) comprising:
a robot including a laser cutting head (11) that has a plurality of degrees of freedom of motion at least in a two-dimensional plane and is configured to cut a target object into a desired cutting shape;
a laser oscillation device (40) configured to transmit laser light to the laser cutting head (11); and
being **characterised by**:
a controller (20) configured to perform:
a starting step of moving the laser cutting head (11) along an arc-shaped path to cause laser light irradiation to move from an operation start point (RS, AS) to a target-path-cutting start point (SP), the operation start point (RS, AS) being determined with reference to a base point (BP) on a coordinate plane that defines the cutting shape, the target-path-cutting start point (SP) being located along the cutting shape;
a cutting step of moving the laser cutting head (11) to cause laser light irradiation to move from the target-path-cutting start point (SP) to a target-path-cutting end point (EP) located along the cutting shape; and
a finishing step of moving the laser cutting head (11) along an arc-shaped path to cause laser light irradiation to move from the target-path operation end point (EP) to an operation end point determined with reference to the base point (BP);
and a step of determining individually the operation start point (RS, AS) and the operation end point (RE, AE), based on a distance from the base point (BP) and an angle from a base line (BL) connecting the target-path-cutting start point (SP) and the base point (BP), and selectively determining to be inside or outside the cutting shape.

## Patentansprüche

1. Verfahren zur Steuerung eines Laserbearbeitungssystems (1), wobei das Laserbearbeitungssystem umfasst:
einen Roboter mit einem Laserschneidkopf (11), der eine Vielzahl von Bewegungsfreiheitsgraden zumindest in einer zweidimensionalen Ebene aufweist; und
eine Laseroszillationsvorrichtung (40), die so konfiguriert ist, dass sie Laserlicht auf den Laserschneidkopf (11) aussendet,
wobei das Laserbearbeitungssystem so konfiguriert ist, dass es ein Zielobjekt durch Bewegen des Laserschneidkopfs (11) in eine gewünschte Schnittform schneidet, wobei das Verfahren umfasst:
einen Startschritt, bei dem der Laserschneidkopf (11) entlang einer bogenförmigen Bahn bewegt wird, um zu bewirken, dass sich eine Laserlichtbestrahlung von einem Betriebsstartpunkt (RS, AS) zu einem Zielbahn-Schneidestartpunkt (SP) bewegt, wobei der Betriebsstartpunkt (RS, AS) unter Bezugnahme auf einen Basispunkt (BP) auf einer Koordinatenebene bestimmt wird, die die Schnittform definiert, wobei sich der Zielbahn-Schneidestartpunkt (SP) entlang der Schnittform befindet;
einen Schneideschritt, bei dem der Laserschneidkopf (11) bewegt wird, um zu bewirken, dass sich die Laserlichtbestrahlung von dem Zielbahn-Schneidestartpunkt (SP) zu einem Zielbahn-Schneideendpunkt (EP) bewegt, der sich entlang der Schnittform befindet; und
einen Beendigungsschritt, bei dem der Laserschneidkopf (11) entlang einer bogenförmigen Bahn bewegt wird, um zu bewirken, dass sich die Laserlichtbestrahlung von dem Zielbahn-Betriebsendpunkt (EP) zu einem Betriebsendpunkt (RE, AE) bewegt, der unter Bezugnahme auf den Basispunkt (BP) bestimmt wird;
**dadurch gekennzeichnet, dass** der Betriebsstartpunkt (RS, AS) und der Betriebsendpunkt (RE, AE) individuell basierend auf einem Abstand vom Basispunkt (BP) und einem Winkel von einer Basislinie (BL), die den Zielbahn-Schneidestartpunkt (SP) und den Basispunkt (BP) verbindet, bestimmt werden, und selektiv als innerhalb oder außerhalb der Schnittform liegend bestimmt werden; und im Startschritt der Laserschneidkopf (11) in einer Richtung entlang eines Liniensegments (BL), das den Basispunkt (BP) und den Zielbahn-Schneidestartpunkt (SP) verbindet, beschleunigt und dann verzögert wird, und in einer Richtung zu dem Liniensegment (BL), das den Basispunkt (BP) und den Zielbahn-Schneidestartpunkt (SP) verbindet, beschleunigt wird.

2. Verfahren zur Steuerung eines Laserbearbeitungssystems (1),
wobei das Laserbearbeitungssystem Folgendes einschließt:
einen Roboter mit einem Laserschneidkopf (11), der eine Vielzahl von Bewegungsfreiheitsgraden zumindest in einer zweidimensionalen Ebene aufweist; und
eine Laseroszillationsvorrichtung (40), die so konfiguriert ist, dass sie Laserlicht auf den Laserschneidkopf (11) aussendet,
wobei das Laserbearbeitungssystem (1) so konfiguriert ist, dass es ein Zielobjekt durch Bewegen des Laserschneidkopfs (11) in eine gewünschte Schnittform schneidet, wobei das Verfahren umfasst:
einen Startschritt, bei dem der Laserschneidkopf (11) entlang einer bogenförmigen Bahn bewegt wird, um zu bewirken, dass sich eine Laserlichtbestrahlung von einem Betriebsstartpunkt (RS, AS) zu einem Zielbahn-Schneidestartpunkt (SP) zu bewegt, wobei der Betriebsstartpunkt (RS, AS) unter Bezugnahme auf einen Basispunkt (BP) auf einer Koordinatenebene bestimmt wird, die die Schnittform definiert, wobei sich der Zielbahn-Schneidestartpunkt (SP) entlang der Schnittform befindet;
einen Schneideschritt, bei dem der Laserschneidkopf (11) bewegt wird, um zu bewirken, dass sich die Laserlichtbestrahlung von dem Zielbahn-Schneidestartpunkt (SP) zu einem Zielbahn-Schneideendpunkt (EP) bewegt, der sich entlang der Schnittform befindet; und
einen Beendigungsschritt, bei dem der Laserschneidkopf (11) entlang einer bogenförmigen Bahn bewegt wird, um zu bewirken, dass sich die Laserlichtbestrahlung von dem Zielbahn-Betriebsendpunkt (EP) zu einem Betriebsendpunkt (RE, AE) bewegt, der unter Bezugnahme auf den Basispunkt (BP) bestimmt wird;
**dadurch gekennzeichnet, dass** der Betriebsstartpunkt (RS, AS) und der Betriebsendpunkt (RE, AE) individuell basierend auf einem Abstand vom Basispunkt (BP) und einem Winkel von einer Basislinie (BL), die den Zielbahn-Schneidestartpunkt (SP) und den Basispunkt (BP) verbindet, bestimmt werden, und selektiv als innerhalb oder außerhalb der Schnittform liegend bestimmt werden; und im Beendigungsschritt der Laserschneidkopf (11) in einer Richtung entlang eines Liniensegments (BL), das den Zielbahn-Schneideendpunkt (EP) und den Basispunkt (BP) verbindet, beschleunigt und dann verzögert wird, und in einer Richtung zu dem Liniensegment (BL), das den Zielbahn-Schneideendpunkt (EP) und den Basispunkt (BP) verbindet, verzögert wird.

3. Laserbearbeitungssystem (1) umfassend:
einen Roboter mit einem Laserschneidkopf (11), der eine Vielzahl von Bewegungsfreiheitsgraden zumindest in einer zweidimensionalen Ebene aufweist und so konfiguriert ist, dass er ein Zielobjekt in eine gewünschte Schnittform schneidet;
eine Laseroszillationsvorrichtung (40), die so konfiguriert ist, dass sie Laserlicht auf den Laserschneidkopf (11) aussendet, und
**gekennzeichnet ist durch**:
eine Steuerung (20), die konfiguriert ist, um Folgendes durchzuführen:
einen Startschritt, bei dem der Laserschneidkopf (11) entlang einer bogenförmigen Bahn bewegt wird, um zu bewirken, dass sich eine Laserlichtbestrahlung von einem Betriebsstartpunkt (RS, AS) zu einem Zielbahn-Schneidestartpunkt (SP) bewegt, wobei der Betriebsstartpunkt (RS, AS) unter Bezugnahme auf einen Basispunkt (BP) auf einer Koordinatenebene bestimmt wird, die die Schnittform definiert, wobei sich der Zielbahn-Schneidestartpunkt (SP) entlang der Schnittform befindet;
einen Schneideschritt, bei dem der Laserschneidkopf (11) bewegt wird, um zu bewirken, dass sich die Laserlichtbestrahlung von dem Zielbahn-Schneidestartpunkt (SP) zu einem Zielbahn-Schneideendpunkt (EP) bewegt, der sich entlang der Schnittform befindet; und
einen Beendigungsschritt, bei dem der Laserschneidkopf (11) entlang einer bogenförmigen Bahn bewegt wird, um zu bewirken, dass sich die Laserlichtbestrahlung von dem Zielbahn-Betriebsendpunkt (EP) zu einem Betriebsendpunkt bewegt, der unter Bezugnahme auf den Basispunkt (BP) bestimmt wird;
und einen Schritt des individuellen Bestimmens des Betriebsstartpunkts (RS, AS) und des Betriebsendpunkts (RE, AE) basierend auf einem Abstand vom Basispunkt (BP) und einem Winkel von einer Basislinie (BL), die den Zielbahn-Schneidestartpunkt (SP) und den Basispunkt (BP) verbindet, und des selektiven Bestimmens als innerhalb oder außerhalb der Schnittform liegend.

## Revendications

1. Procédé de commande d'un système d'usinage laser (1), le système d'usinage laser comportant :
un robot avec une tête de découpe laser (11) présentant une pluralité de degrés de liberté de mouvement au moins dans un plan bidimensionnel ; et
un dispositif d'oscillation laser (40) configuré pour transmettre une lumière laser à la tête de découpe laser (11),
le système d'usinage laser étant configuré pour découper un objet cible en une forme de découpe souhaitée par déplacement de la tête de découpe laser (11), le procédé comprenant :
une étape de démarrage consistant à déplacer la tête de découpe laser (11) le long d'un trajet en forme d'arc pour amener l'irradiation de lumière laser à se déplacer d'un point de démarrage d'opération (RS, AS) à un point de démarrage de découpe de trajet cible (SP), le point de démarrage d'opération (RS, AS) étant déterminé par rapport à un point de base (BP) sur un plan de coordonnées qui définit la forme de découpe, le point de démarrage de découpe de trajet cible (SP) étant situé le long de la forme de découpe ;
une étape de découpe consistant à déplacer la tête de découpe laser (11) pour amener l'irradiation de lumière laser à se déplacer du point de démarrage de découpe de trajet cible (SP) à un point de fin de découpe de trajet cible (EP) situé le long de la forme de découpe ; et
une étape de finition consistant à déplacer la tête de découpe laser (11) le long d'un trajet en forme d'arc pour amener l'irradiation de lumière laser à se déplacer du point de fin d'opération de trajet cible (EP) à un point de fin d'opération (RE, AE) déterminé par rapport au point de base (BP) ;
**caractérisé en ce que** le point de démarrage d'opération (RS, AS) et le point de fin d'opération (RE, AE) sont déterminés individuellement sur la base d'une distance à partir du point de base (BP) et d'un angle à partir d'une ligne de base (BL) reliant le point de démarrage de découpe de trajet cible (SP) et le point de base (BP), et déterminés sélectivement pour être à l'intérieur ou à l'extérieur de la forme de découpe ; et
dans l'étape de démarrage, la tête de découpe laser (11) est accélérée et ensuite décélérée dans une direction le long d'un segment de ligne (BL) reliant le point de base (BP) et le point de démarrage de découpe de trajet cible (SP), et est accélérée dans une direction allant vers le segment de ligne (BL) reliant le point de base (BP) et le point de démarrage de découpe de trajet cible (SP).

2. Procédé de commande d'un système d'usinage laser (1), le système d'usinage laser comportant :
un robot avec une tête de découpe laser (11) présentant une pluralité de degrés de liberté de mouvement au moins dans un plan bidimensionnel ; et
un dispositif d'oscillation laser (40) configuré pour transmettre une lumière laser à la tête de découpe laser (11),
le système d'usinage laser (1) étant configuré pour découper un objet cible en une forme de découpe souhaitée par déplacement de la tête de découpe laser (11), le procédé comprenant :
une étape de démarrage consistant à déplacer la tête de découpe laser (11) le long d'un trajet en forme d'arc pour amener l'irradiation de lumière laser à se déplacer d'un point de démarrage d'opération (RS, AS) à un point de démarrage de découpe de trajet cible (SP), le point de démarrage d'opération (RS, AS) étant déterminé par rapport à un point de base (BP) sur un plan de coordonnées qui définit la forme de découpe, le point de démarrage de découpe de trajet cible (SP) étant situé le long de la forme de découpe ;
une étape de découpe consistant à déplacer la tête de découpe laser (11) pour amener l'irradiation de lumière laser à se déplacer du point de démarrage de découpe de trajet cible (SP) à un point de fin de découpe de trajet cible (EP) situé le long de la forme de découpe ; et
une étape de finition consistant à déplacer la tête de découpe laser (11) le long d'un trajet en forme d'arc pour amener l'irradiation de lumière laser à se déplacer du point de fin d'opération de trajet cible (EP) à un point de fin d'opération (RE, AE) déterminé par rapport au point de base (BP) ;
**caractérisé en ce que** le point de démarrage d'opération (RS, AS) et le point de fin d'opération (RE, AE) sont déterminés individuellement sur la base d'une distance à partir du point de base (BP) et d'un angle à partir d'une ligne de base (BL) reliant le point de démarrage de découpe de trajet cible (SP) et le point de base (BP), et déterminés sélectivement pour être à l'intérieur ou à l'extérieur de la forme de découpe ; et
dans l'étape de finition, la tête de découpe laser (11) est accélérée et ensuite décélérée dans une direction le long d'un segment de ligne (BL) reliant le point de fin de découpe de trajet cible (EP) et le point de base (BP), et est décélérée dans une direction allant vers le segment de ligne (BL) reliant le point de fin de découpe de trajet cible (EP) et le point de base (BP).

3. Système d'usinage laser (1) comprenant :
un robot comportant une tête de découpe laser (11) qui présente une pluralité de degrés de liberté de mouvement au moins dans un plan bidimensionnel et est configuré pour découper un objet cible en une forme de découpe souhaitée ;
un dispositif d'oscillation laser (40) configuré pour transmettre une lumière laser à la tête de découpe laser (11) ; et
étant **caractérisé par** :
un dispositif de commande (20) configuré pour effectuer :
une étape de démarrage consistant à déplacer la tête de découpe laser (11) le long d'un trajet en forme d'arc pour amener l'irradiation de lumière laser à se déplacer d'un point de démarrage d'opération (RS, AS) à un point de démarrage de découpe de trajet cible (SP), le point de démarrage d'opération (RS, AS) étant déterminé par rapport à un point de base (BP) sur un plan de coordonnées qui définit la forme de découpe, le point de démarrage de découpe de trajet cible (SP) étant situé le long de la forme de découpe ;
une étape de découpe consistant à déplacer la tête de découpe laser (11) pour amener l'irradiation de lumière laser à se déplacer du point de démarrage de découpe de trajet cible (SP) à un point de fin de découpe de trajet cible (EP) situé le long de la forme de découpe ; et
une étape de finition consistant à déplacer la tête de découpe laser (11) le long d'un trajet en forme d'arc pour amener l'irradiation de lumière laser à se déplacer du point de fin d'opération de trajet cible (EP) à un point de fin d'opération déterminé par rapport au point de base (BP) ;
et une étape consistant à déterminer individuellement le point de démarrage d'opération (RS, AS) et le point de fin d'opération (RE, AE) sur la base d'une distance à partir du point de base (BP) et d'un angle à partir d'une ligne de base (BL) reliant le point de démarrage de découpe de trajet cible (SP) et le point de base (BP), et à les déterminer sélectivement pour qu'ils soient à l'intérieur ou à l'extérieur de la forme de découpe.
